(19) Europäisches Patentamt / European Patent Office / Office européen des brevets

(11) **EP 4 478 645 A1**

(12) **EUROPEAN PATENT APPLICATION**
published in accordance with Art. 153(4) EPC

(43) Date of publication:
**18.12.2024 Bulletin 2024/51**

(21) Application number: **23753215.5**

(22) Date of filing: **10.02.2023**

(51) International Patent Classification (IPC):
*H04L 5/00* (2006.01)      *H04L 1/18* (2023.01)
*H04W 72/23* (2023.01)     *H04W 4/06* (2009.01)

(52) Cooperative Patent Classification (CPC):
**H04L 1/18; H04L 5/00; H04W 4/06; H04W 72/23**

(86) International application number:
**PCT/KR2023/002008**

(87) International publication number:
**WO 2023/153869 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.02.2022 KR 20220018292**

(71) Applicant: **LG Electronics Inc.
Yeongdeungpo-gu
Seoul 07336 (KR)**

(72) Inventors:
• **LEE, Youngdae**
  **Seoul 06772 (KR)**
• **YANG, Suckchel**
  **Seoul 06772 (KR)**
• **KIM, Seonwook**
  **Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **METHOD AND DEVICE FOR TRANSMITTING OR RECEIVING HYBRID AUTOMATIC REPEAT REQUEST ACKNOWLEDGMENT INFORMATION IN WIRELESS COMMUNICATION SYSTEM**

(57) Disclosed are a method and device for transmitting or receiving hybrid automatic repeat request (HARQ) acknowledgement (ACK) information in a wireless communication system. According to an embodiment of the present disclosure, whether a HARQ-ACK codebook is multiplexed with respect to a cast type and a HARQ-ACK codebook type may be indicated on the basis of a downlink allocation index (DAI) included in downlink control information (DCI) including scheduling information of a physical uplink shared channel (PUSCH) in a wireless communication system.

**FIG.8**

```
┌──────────────────────────────────────────┐
│ Receive DCI including DAI information and  │ ~ S810
│     scheduling PUSCH transmission          │
└──────────────────────────────────────────┘
                    │
                    ▼
┌──────────────────────────────────────────┐
│ Generate HARQ-ACK codebook based on DAI    │ ~ S820
│              information                    │
└──────────────────────────────────────────┘
                    │
                    ▼
┌──────────────────────────────────────────┐
│ Multiplex and transmit HARQ-ACK            │ ~ S830
│ information in PUSCH based on HARQ-ACK      │
│              codebook                       │
└──────────────────────────────────────────┘
```

EP 4 478 645 A1

**Description**

[Technical Field]

The present disclosure relates to a wireless communication system, and more particularly, to a method and a device for transmitting or receiving HARQ-ACK information in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical problem of the present disclosure is to provide a method and a device for transmitting or receiving HARQ-ACK information supporting HARQ-ACK codebook multiplexing based on a cast type and a HARQ-ACK codebook type in a wireless communication system.

An additional technical problem of the present disclosure is to provide a method and a device for transmitting or receiving HARQ-ACK information, in which whether to multiplex a HARQ-ACK codebook for a cast type and a HARQ-ACK codebook type is indicated, based on a downlink allocation index (DAI) included in downlink control information (DCI) including scheduling information of a physical uplink shared channel (PUSCH) in a wireless communication system.

The technical objects to be achieved by the present disclosure are not limited to the above-described technical objects, and other technical objects which are not described herein will be clearly understood by those skilled in the pertinent art from the following description.

[Technical Solution]

The method performed by a terminal in a wireless communication system according to an aspect of the present disclosure may include receiving from a network downlink control information (DCI) including downlink allocation index (DAI) information of at least one bit and scheduling physical uplink shared channel (PUSCH) transmission; generating a hybrid automatic repeat and request (HARQ)-acknowledgement (ACK) codebook based on the DAI information; and multiplexing and transmitting HARQ-ACK information in the PUSCH based on the HARQ-ACK codebook to the network. For example, based on a semi-static HARQ-ACK codebook being configured for both unicast and multicast, the DAI information may include one bit associated with a HARQ-ACK codebook for both unicast and multicast, or the DAI information may include a first one bit associated with unicast HARQ-ACK information and a second one bit associated with multicast HARQ-ACK information.

A method performed by a base station in a wireless communication system according to an additional aspect of the present disclosure may include transmitting to a terminal downlink control information (DCI) including downlink allocation index (DAI) information of at least one bit and scheduling physical uplink shared channel (PUSCH) transmission; and based on a hybrid automatic repeat and request (HARQ)-acknowledgement (ACK) codebook generated by the terminal based on the DAI information, receiving HARQ-ACK information multiplexed in the PUSCH from the terminal. For example, based on a semi-static HARQ-ACK codebook being configured for both unicast and multicast, the DAI information may include one bit associated with a HARQ-ACK codebook for both unicast and multicast, or the DAI information may include a first one bit associated with unicast HARQ-ACK information and a second one bit associated with multicast HARQ-ACK information.

[Technical Effects]

According to the present disclosure, a method and a device for transmitting or receiving HARQ-ACK information supporting HARQ-ACK codebook multiplexing based on a cast type and a HARQ-ACK codebook type in a wireless communication system may be provided.

According to the present disclosure, a method and a device for transmitting or receiving HARQ-ACK information, in which whether to multiplex a HARQ-ACK codebook for a cast type and a HARQ-ACK codebook type is indicated, based on a downlink allocation index (DAI) included in downlink control information (DCI) including scheduling information of a physical uplink shared channel (PUSCH) in a wireless communication system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram exemplarily showing a transmission timing of unicast HARQ-ACK information and multicast HARQ-ACK information to which the present disclosure may be applied.

FIG. 8 is a diagram for describing a HARQ-ACK transmission method of a terminal according to an embodiment of the present disclosure.

FIG. 9 is a diagram for describing a HARQ-ACK reception method of a base station according to an embodiment of the present disclosure.

FIG. 10 is a diagram for illustrating a signaling process of a network side and a terminal according to an embodiment of the present disclosure.

FIG. 11 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition,"/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement

CSI-RS: channel state information - reference signal

DMRS: demodulation reference signal

FDM: frequency division multiplexing

FFT: fast Fourier transform

IFDMA: interleaved frequency division multiple access

IFFT: inverse fast Fourier transform

L1-RSRP: Layer 1 reference signal received power

L1-RSRQ: Layer 1 reference signal received quality

MAC: medium access control

NZP: non-zero power

OFDM: orthogonal frequency division multiplexing

PDCCH: physical downlink control channel

PDSCH: physical downlink shared channel

PMI: precoding matrix indicator

RE: resource element

RI: Rank indicator

RRC: radio resource control

RSSI: received signal strength indicator

Rx: Reception

QCL: quasi co-location

SINR: signal to interference and noise ratio

SSB (or SS/PBCH block): Synchronization signal block (including PSS (primary synchronization signal), SSS (secondary synchronization signal) and PBCH (physical broadcast channel))

TDM: time division multiplexing

TRP: transmission and reception point

TRS: tracking reference signal

Tx: transmission

UE: user equipment

ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

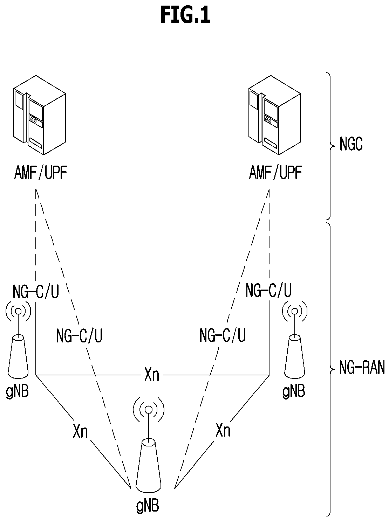

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

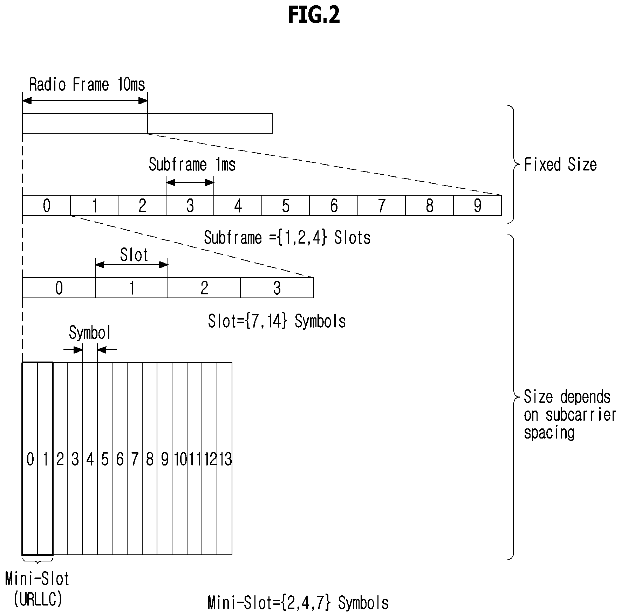

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu} - 1\}$ in a subframe and are numbered in an increasing order of $n_{s,f}^{\mu} \in \{0,..., N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

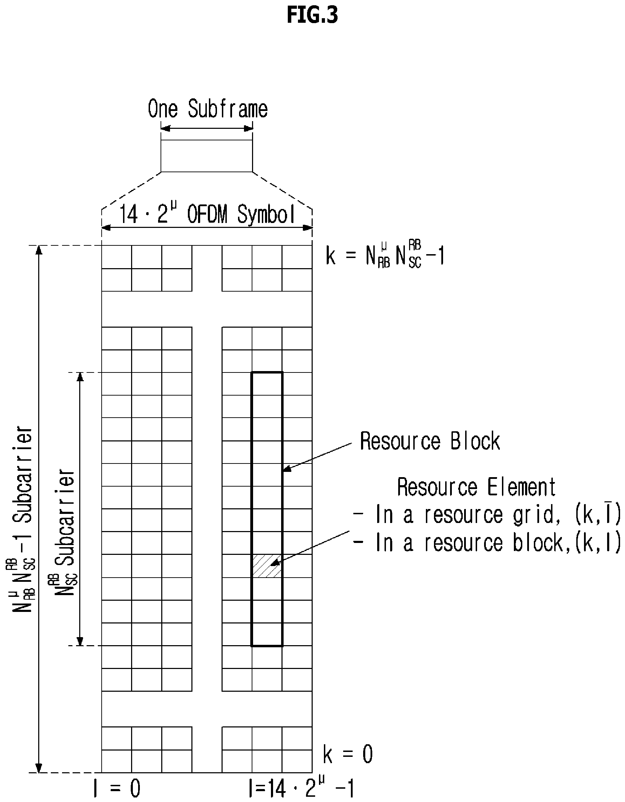

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu}=n_{PRB}^{\mu}+N_{BWP,i}^{start,\mu}$$

$N_{BWP,i}^{start,\mu}$ is a common resource block that a BWP starts relatively to common resource block 0.

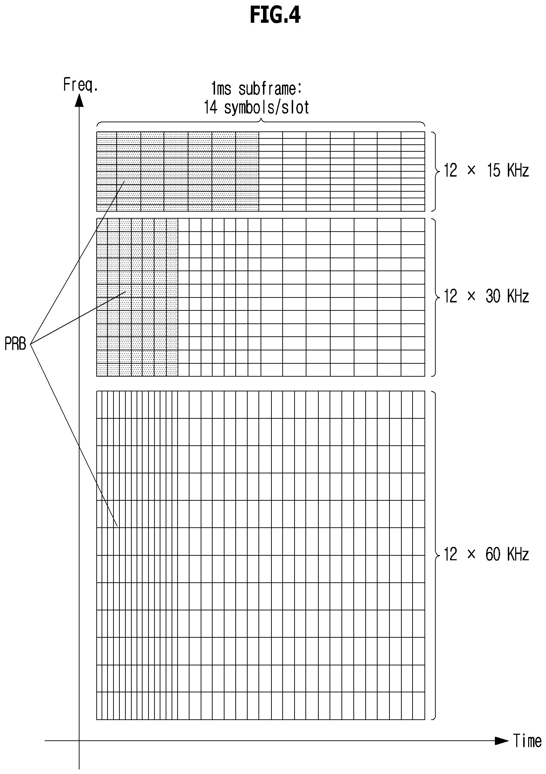

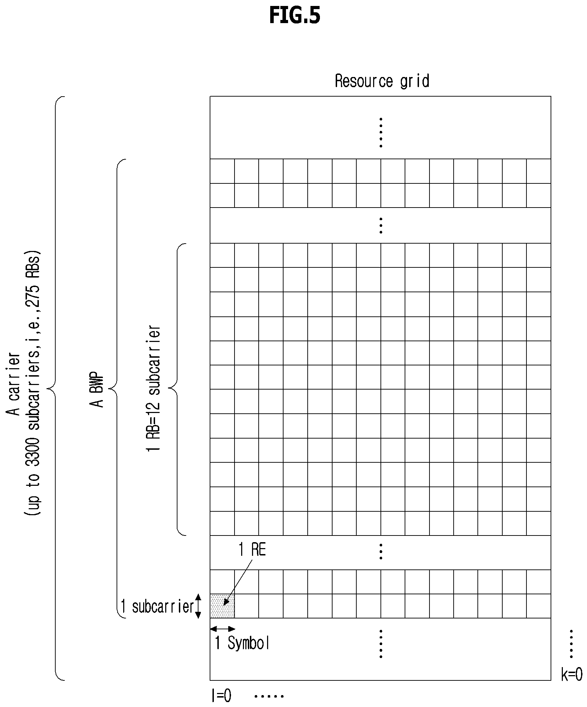

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

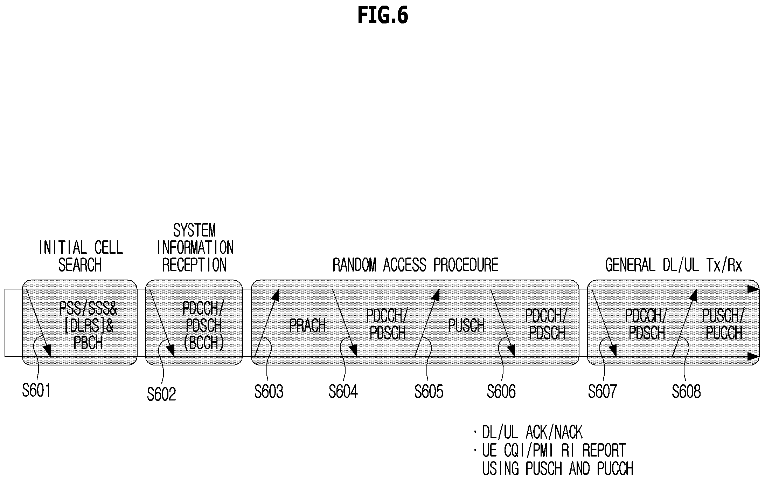

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
| --- | --- |
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation and Coding Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

MBMS (Multimedia Broadcast Multicast Service)

MBMS may include a single frequency network (SFN) scheme in which a plurality of base stations or a plurality of cells are synchronized to transmit the same data to a terminal, and a single cell point to multipoint (SC-PTM) scheme for broadcasting within the corresponding cell coverage through the PDCCH/PDSCH channel.

SFN scheme may be used to provide a broadcast service to a wide area (e.g., MBMS area) through resources allocated semi-statically in advance. A multicast broadcast single frequency network (MBSFN) provides logical channels, a multicast control channel (MCCH) and a multicast traffic channel (MTCH), and both of the MCCH and the MTCH are mapped to a transport channel, a multicast channel (MCH), and the MCH is mapped to a physical channel, a physical multicast channel (PMCH). That is, a plurality of base stations/cells may be synchronized to provide the same data to a terminal through the PMCH. One base station/cell may belong to a plurality of MBSFN areas. In addition, it may be required to configure the MBSFN subframe for the MBSFN service.

SC-PTM scheme may be mainly used to provide a broadcast service only within a cell coverage through dynamic resources. SC-PTM provides one logical channel, SC-MCCH (Single Cell Multicast Control Channel) and one or more logical channels SC-MTCH (Single Cell Multicast Traffic Channel). These logical channels (i.e., SC-MCCH and SC-MTCH) are mapped to the transport channel, DL-SCH, and the transport channel DL-SCH is mapped to the physical channel PDSCH. A PDSCH transmitting data corresponding to the SC-MCCH or SC-MTCH is scheduled through a PDCCH that is CRC scrambled with a group-radio network temporary identifier (G-RNTI). Here, a temporary mobile group identity (TMGI) corresponding to the MBMS service ID may be mapped one-to-one with a specific G-RNTI value. Accordingly, if the base station provides a plurality of MBMS services, a plurality of G-RNTI values may be allocated for SC-PTM transmission. One or more terminals may perform PDCCH monitoring using a specific G-RNTI to receive a specific MBMS service. Here, a discontinuous reception (DRX) on-duration period dedicated to SC-PTM may be configured for a specific MBMS service/specific G-RNTI. In this case, the corresponding terminals may wake up only for a specific on-duration period and perform PDCCH monitoring for the G-RNTI.

SPS (semi-persistent scheduling)

The base station may provide a specific terminal with SPS configuration dedicated to the terminal, and allocate one or more downlink SPS transmission resources that are repeated according to a configured period. DCI of terminal-dedicated (or terminal-specific) PDCCH may indicate activation (SPS activation) of a specific SPS configuration index. The terminal may perform downlink reception through the activated SPS transmission resource. Such SPS transmission resource may be used for initial HARQ transmission. The base station may allocate a retransmission resource of a specific SPS configuration index through DCI of PDCCH dedicated to a terminal. For example, when the terminal reports HARQ NACK for the SPS transmission resource, the base station may allocate the retransmission resource through DCI so that the terminal may receive downlink retransmission.

DCI of PDCCH dedicated to a terminal may indicate release or deactivation of a specific SPS configuration index. In this case, the corresponding terminal does not receive the SPS transmission resource for which release/deactivation is indicated.

CRC of DCI/PDCCH for activation/retransmission/deactivation for SPS configuration / resource may be scrambled by configured scheduling-radio network temporary identifier (CS-RNTI).

MBS (Multicast Broadcast Service)

In the NR-based wireless communication system, introduction of a new MBS-based DL broadcast or DL multicast transmission scheme, which is distinct from the aforementioned MBMS (e.g., MBSFN or SC-PTM), is being discussed. For example, the network side (e.g., base station/cell/TRP) may provide a point-to-multipoint (PTM) transmission scheme and a point-to-point (PTP) transmission scheme for DL broadcast or DL multicast transmission.

In the PTM transmission scheme for MBS, the base station may transmit a group common (or group-specific) PDCCH and a group common PDSCH to a plurality of terminals. A plurality of terminals may simultaneously receive the same group common PDCCH transmission and group common PDSCH transmission, and decode the same MBS data.

In the PTP transmission scheme for MBS, the base station may transmit a terminal-dedicated (or terminal-specific) PDCCH and a terminal-dedicated PDSCH to a specific terminal. The corresponding single terminal may receive the terminal-dedicated PDCCH and a terminal-dedicated PDSCH. When there are a plurality of terminals receiving the same MBS service, the base station may individually transmit the same MBS data to each of the plurality of terminals through different terminal-dedicated PDCCHs and terminal-dedicated PDSCHs.

In a PTM transmission method, a base station may transmit a plurality of group common PDSCHs to terminals. A base station may receive a terminal's HARQ-ACK for a group common PDSCH through a terminal-dedicated PUCCH resource.

When a terminal successfully decodes a transport block (TB) for a group common PDSCH, a terminal may transmit an ACK value as HARQ-ACK information. When a terminal fails to successfully decode a TB for a unicast PDSCH or a group common PDSCH, a terminal may transmit a NACK value as HARQ-ACK information. This HARQ-ACK transmission method may be referred to as an ACK/NACK-based HARQ-ACK method. ACK/NACK-based HARQ-ACK information may be generally transmitted through a terminal-dedicated PUCCH resource.

A NACK only-based HARQ-ACK method may be applied/configured for a group common PDSCH. For example, a terminal may not transmit a PUCCH in case of an ACK value (i.e., when it succeeds in decoding for a received PDSCH) and may transmit a PUCCH only in case of a NACK value (i.e., when it fails in decoding for a received PDSCH). NACK only-based HARQ-ACK information may be generally transmitted through a group common PUCCH resource. When multiple HARQ-ACKs are transmitted in a NACK only based HARQ-ACK method, if only an ACK value is included, HARQ-ACK information may not be transmitted and if even one NACK value is included, HARQ-ACK information may be transmitted.

In examples below, ACK/NACK-based HARQ-ACK may be referred to as HARQ-ACK information based on a first HARQ-ACK reporting mode and NACK only-based HARQ-ACK may be referred to as HARQ-ACK information based on a second HARQ-ACK reporting mode. In addition, a DCI format that is CRC-scrambled by a G-RNTI or a G-CS-RNTI may be referred to as a group common DCI format or a multicast DCI format. A group common/multicast DCI format may be also referred to as a group common/multicast PDCCH and a PDSCH scheduled thereby may be referred to as a group common/multicast PDSCH.

For example, a terminal may receive unicast traffic through a terminal-dedicated unicast PDSCH and may receive multicast traffic like a MBS through a group common multicast PDSCH. A terminal may transmit unicast HARQ-ACK for a unicast PDSCH and transmit multicast HARQ-ACK for a multicast PDSCH. If PUCCH transmission for unicast HARQ-ACK and PUCCH transmission for multicast HARQ-ACK are overlapped or should be transmitted in the same slot, there is a problem in which it is not clear how a terminal that may not transmit two PUCCHs simultaneously will transmit unicast HARQ-ACK and multicast HARQ-ACK. In particular, when multicast HARQ-ACK is configured as NACK only-based HARQ-ACK, there is a problem in which it is not clear how a plurality of HARQ-ACKs are transmitted under a situation where NACK only-based HARQ-ACK and ACK/NACK-based HARQ-ACK transmission are overlapped or should be transmitted to the same slot.

In the present disclosure, an ACK/NACK-based HARQ-ACK transmission method is not limited to HARQ-ACK for a unicast PDCCH/PDSCH, and as described above, an ACK/NACK-based HARQ-ACK transmission method may be also applied to HARQ-ACK for a multicast PDCCH/PDSCH.

In the present disclosure, for a case in which unicast HARQ-ACK information and multicast HARQ-ACK information (e.g., at least one of ACK/NACK-based HARQ-ACK information or NACK only-based HARQ-ACK information) collide in the same time unit, various examples of transmitting or receiving HARQ-ACK by applying at least one method of multiplexing, dropping, partial selection or separation are described.

For example, when NACK only-based HARQ-ACK and ACK/NACK-based HARQ-ACK transmission are overlapped or should be transmitted to the same slot, a plurality of HARQ-ACKs may be multiplexed into one PUCCH or may be transmitted by being divided into a plurality of PUCCHs.

For example, a terminal may be configured to transmit HARQ-ACK according to one of methods described below or transmit HARQ-ACK according to a combination of at least two of methods described below.

For example, a method of dropping HARQ-ACK with low priority (LP) and transmitting HARQ-ACK with high priority (HP) for all overlapping unicast HARQ-ACK and multicast HARQ-ACK may be applied/configured.

For example, the following options may be considered for overlapping unicast HARQ-ACK and multicast HARQ-ACK transmission.

Option 1: A terminal may preferentially transmit unicast HARQ-ACK and drop multicast HARQ-ACK.

Option 2: A base station may determine what will be transmitted and what will be dropped preferentially among unicast HARQ-ACK and multicast HARQ-ACK and configure/indicate it to a terminal.

Option 3: A priority indicated by the last received DCI for unicast HARQ-ACK and a priority indicated by the last received DCI for multicast HARQ-ACK may be compared to transmit unicast HARQ-ACK or multicast HARQ with high priority and drop the remaining HARQ-ACK.

Option 4: Among unicast HARQ-ACK and multicast HARQ-ACK, one with a small HARQ-ACK payload may be dropped and one with a large HARQ-ACK payload may be transmitted.

In addition, when ACK (only) is indicated for NACK only-based HARQ-ACK (i.e., when actual PUCCH transmission is not required), a terminal may determine that there is no collision with another HARQ-ACK or SR/CSI reporting, etc. Alternatively, even when ACK (only) is indicated for NACK only-based HARQ-ACK (i.e., when actual PUCCH transmission is not required), it may be determined that it may conflict with another HARQ-ACK or SR/CSI reporting, etc. by assuming it is virtually transmitted. In determining whether a terminal collides with another UCI, a base station may configure to a terminal whether NACK only-based HARQ-ACK will be considered to be actually transmitted or whether it will be considered to be virtually transmitted regardless of actual transmission.

In the present disclosure, when certain information is defined between a terminal and a base station, it may mean that a terminal and a base station know corresponding information without separate signaling between a terminal and a base station; when it is configured between a terminal and a base station, it may mean that corresponding information is transmitted/received through higher layer (e.g., RRC) signaling between a terminal and a base station; and when it is indicated between a terminal and a base station, it may mean that corresponding information is transmitted/received through lower layer (e.g., L1 (e.g., DCI/UCI), L2 (e.g., MAC-CE)) signaling.

Improved HARQ-ACK Codebook

Hereinafter, examples of the present disclosure for a HARQ-ACK codebook considering various cast types (e.g., unicast, multicast, broadcast, etc.) are described.

A HARQ-ACK codebook may correspond to a set (or a sequence) of bits representing HARQ-ACK information (e.g., ACK/NACK information) for at least one PDSCH received during a predetermined time window. For a HARQ-ACK codebook, its size may be configured as a semi-static type (or type-1), a dynamic type (or type-2), or a one-shot type (or type-3). In addition, a HARQ-ACK codebook may be configured to be transmitted via a PUCCH or a PUSCH.

Multicast SPS may be activated or deactivated based on DCI. For broadcast SPS, a DCI-based activation/-deactivation method may be applied, but an activation/deactivation method through a RRC message may also be applied. In this case, since multiple terminals activate or deactivate the same broadcast SPS transmission, there is a problem that it is not clear at what time point it should be activated/deactivated from a terminal's point of view.

In addition, it may be assumed that a type-3 HARQ-ACK codebook is configured for a unicast PDSCH and a type-1 or type-2 HARQ-ACK codebook is configured for multicast PDSCHs. In this case, there is a problem that it is not clear how to configure a type-3 codebook for a HARQ process number (HPN) value shared by a unicast PDSCH and multicast PDSCHs. In particular, when sharing a HARQ process, there is a problem that whether to toggle NDI is not clear and accordingly, a NDI configuration of a type-3 codebook is not clear.

The present disclosure describes examples in which a type-3 codebook is configured for a HARQ process shared by a unicast PDSCH and a multicast PDSCH when a type-3 codebook is configured for a terminal-dedicated PDSCH and a different type of codebook is configured for a multicast PDSCH.

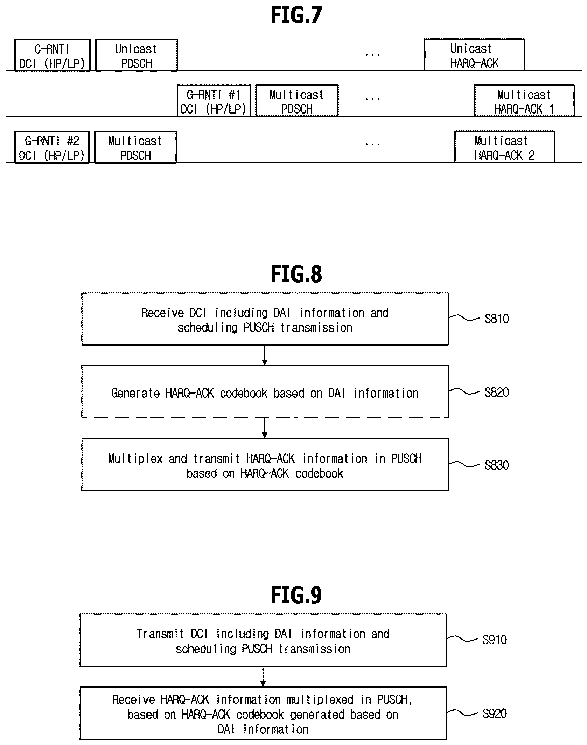

FIG. 7 is a diagram exemplarily showing a transmission timing of unicast HARQ-ACK information and multicast HARQ-ACK information to which the present disclosure may be applied.

In an example of FIG. 7, DCI (or a PDCCH), a PDSCH scheduled thereby and HARQ-ACK therefor are indicated on the same line. In other words, in FIG. 7, three sets of associated/corresponding DCI (a PDCCH), a PDSCH and HARQ-ACK are shown. Although an example of FIG. 7 shows three HARQ-ACK for three DCI/PDSCHs, a scope of the present disclosure may be also applied to a plurality of HARQ-ACK for a plurality of DCI/PDSCHs. Although a horizontal axis is related to time, it is not intended to indicate an absolute or relative time position, and illustratively represents a situation in which HARQ-ACK corresponding to a different DCI/PDSCH overlaps (or is transmitted in the same slot).

In an example of FIG. 7, a terminal may receive a plurality of multicast PDCCHs/PDSCHs scheduled with a different G-RNTI in a FDM or TDM method.

In an example of FIG. 7, DCI CRC-scrambled with a C-RNTI may correspond to unicast DCI, and DCI CRC-scrambled with a G-RNTI may correspond to multicast DCI. In addition, unicast DCI/multicast DCI may indicate a high priority (HP) or a low priority (LP).

In an example of FIG. 7, a terminal may receive both a unicast PDSCH and multicast PDSCHs transmitted by FDM or TDM. For example, a unicast PDSCH occasion may be transmitted by TDM with a multicast PDSCH occasion for G-RNTI#1, and may be transmitted by FDM with a multicast PDSCH occasion for G-RNTI#2.

A base station may configure PDSCH-config for a CFR separately from a set of PDSCH configuration parameters for a BWP (e.g., PDSCH-config). In this case, a CFR may be associated with an active BWP of a terminal. Accordingly, some parameters may be commonly configured for a CFR and a BWP. Accordingly, a base station may configure some parameters only for one PDSCH-config without repeating them for PDSCH-config for a CFR and PDSCH-config for a BWP.

In other words, if a configuration value for parameter A is the same in PDSCH-config for a CFR and PDSCH-config for a BWP, a base station may include parameter A only in PDSCH-config for a BWP and not in PDSCH-config for a CFR.

In an example of FIG. 7, for different PDSCHs that may be transmitted in the same cell, if HARQ-ACK for a unicast PDSCH is configured as a type-3 codebook and multicast PDSCHs are configured as a type-1 codebook or a type-2 codebook, a terminal may configure a type-3 codebook for a HPN value shared by a unicast PDSCH and multicast PDSCHs as follows.

Embodiment 1

This embodiment relates to a method for configuring a NDI value of a type-3 codebook based on whether to share a HARQ process of PTM transmission and unicast transmission.

According to whether a specific HARQ process mapped to a specific HPN value may be shared and used in multicast transmission and unicast transmission, or whether a specific HARQ process mapped to a specific HPN value is used only for multicast transmission or only for unicast transmission, a terminal may configure a type-3 codebook for unicast HARQ-ACK transmission for a specific HARQ process as follows.

If a specific HARQ process mapped to a specific HPN value may be shared and used in multicast transmission and unicast transmission, a base station may sequentially transmit a multicast PDSCH and a unicast PDSCH for a HARQ process for the same HPN value, or may sequentially transmit a unicast PDSCH and a multicast PDSCH. In this case, a NDI value of DCI for a multicast PDSCH transmitted subsequently and a NDI value of DCI for a unicast PDSCH may be toggled.

If NDI is toggled for the same HPN value regardless of a cast type, a terminal that most recently received unicast transmission or multicast transmission may configure a type-3 codebook and transmit it to a network as follows.

Option 1: (Regardless of whether the most recent reception is unicast or multicast,) a terminal may include a NDI value indicated by the most recently received unicast DCI for a specific HARQ process and a HARQ-ACK result of a unicast PDSCH scheduled by corresponding DCI in a type-3 codebook. In other words, a terminal may include an actual reception result of a unicast PDSCH for a corresponding HARQ process in a type-3 codebook.

Option 2: (Regardless of whether the most recent reception is unicast or multicast,) a terminal may include a NDI value indicated by the most recently received multicast DCI for a specific HARQ process and a HARQ-ACK result of a multicast PDSCH scheduled by corresponding DCI as NACK in a type-3 codebook. In other words, a terminal may make a type-3 codebook indicate NACK for a corresponding HARQ process regardless of whether actual decoding of a multicast PDSCH is successful.

Option 3: A terminal may configure a type-3 codebook by using one of the following methods A, B, C, D, and E.

Method A: In a type-3 codebook, a HARQ-ACK bit for the specific HARQ process may be configured to indicate ACK or NACK according to a HARQ-ACK value for the most recently received unicast PDSCH or the most recently reported HARQ-ACK value.

Method B: In a type-3 codebook, a HARQ-ACK bit for the specific HARQ process is configured to indicate ACK or NACK according to a HARQ-ACK value for the most recently received PDSCH or the most recently reported HARQ-ACK value. Here, the most recently received PDSCH may be a unicast PDSCH or a multicast PDSCH.

Method C: If the most recent multicast PDSCH is received through the above specific HARQ process, a HARQ-ACK bit for the specific HARQ process in a type-3 codebook may be always configured as NACK or ACK. Here, whether it is always NACK or ACK may be configured through signaling between a base station and a terminal, or may be predefined without signaling between a base station and a terminal.

Method D: If the most recent multicast PDSCH is received through the specific HARQ process, a HARQ-ACK bit for the specific HARQ process in a type-3 codebook may not be included in a type-3 codebook.

Method E: If the specific HARQ process is configured to be shared by multicast and unicast, or if it is mapped to a HPN indicated by a base station, a HARQ-ACK bit for the specific HARQ process in a type-3 codebook may be always configured as NACK or ACK. Here, whether it is always NACK or ACK may be configured through signaling between a base station and a terminal, or may be predefined without signaling between a base station and a terminal.

If NDI is toggled only for the same HPN value of the same cast type and NDI is not toggled for the same HPN value of a different cast type, (regardless of whether the most recent reception is unicast or multicast), a terminal may include a NDI value indicated by the most recently received unicast DCI for a specific HARQ process and a HARQ-ACK result of a unicast PDSCH scheduled by corresponding DCI in a type-3 codebook. In other words, a terminal may include an actual reception result of a unicast PDSCH for a corresponding HARQ process in a type-3 codebook.

If a specific HARQ process mapped to a specific HPN value is used only for multicast transmission or only for unicast transmission, a terminal may include HARQ-ACK information and NDI information for a unicast-dedicated HARQ process in a type-3 codebook and may not include information on a multicast-dedicated HARQ process in a type-3 codebook. Alternatively, if a base station designated specific HARQ process(es) with a type-3 codebook configuration for unicast, a terminal may include HARQ-ACK information and NDI information for a designated HARQ process in a type-3 codebook and may not include information on an undesignated HARQ process in a type-3 codebook.

Embodiment 2

This embodiment relates to a method for newly defining a downlink assignment index (DAI) of DCI for configuring a multicast HARQ-ACK codebook.

A terminal may configure a type-1 codebook and/or a type-2 codebook in the following method according to a configuration from a base station and a DAI value of DCI.

A base station may allocate an UL PUSCH resource or schedule DL PDSCH transmission through DCI. In this case, DCI transmitted by a base station to allocate an UL PUSCH resource may be abbreviated as UL DCI, and DCI transmitted by a base station to schedule DL PDSCH transmission may be abbreviated as DL DCI.

A terminal may receive a PUCCH resource indicator (PRI) through group common DCI or terminal-specific (or UE-specific) DCI. A terminal may transmit HARQ-ACK information for a PDSCH scheduled by group common DCI or terminal-specific DCI through a PUCCH resource indicated by a PRI. If corresponding PUCCH transmission overlaps with PUSCH transmission, a terminal may transmit a PUSCH instead of a PUCCH. In other words, UCI including corresponding HARQ-ACK information may be transmitted to a network in a piggyback manner via a PUSCH.

If a type-2 codebook is configured for HARQ-ACK of a multicast PDSCH, group common DCI that schedules a group common PDSCH for a specific G-RNTI may include a counter DAI and a total DAI. A counter DAI may indicate the order of PDSCHs currently scheduled for a specific G-RNTI, and a total DAI may indicate the total number of PDSCHs scheduled so far for a specific G-RNTI.

A TB transmitted through a PDSCH scheduled by group common DCI may be retransmitted in a PTP manner. In this case, a terminal may obtain PDSCH transmission information for retransmission of a corresponding TB through terminal-dedicated DL DCI in which CRC is scrambled with a C-RNTI. Here, DL DCI may include a counter DAI and a total DAI for a G-RNTI corresponding to a TB. For example, if one same TB is scheduled twice through two group common DCI and is scheduled for the third time through PTP retransmission, a [counter DAI, total DAI] pair in the first two group common DCI may have a value of [0,0] and [1,1], respectively. A [counter DAI, total DAI] pair in terminal-specific DCI for the next PTP retransmission may have a value of [2,2] based on (or following) a DAI value of group common DCI. Alternatively, a DAI of DCI for PTP retransmission may have a value separate from (or not based on, or not connected to) a DAI value of group common DCI. For example, a [counter DAI, total DAI] pair of DCI for PTP retransmission may have a value based on (or connected to) a [counter DAI, total DAI] value of previously transmitted unicast DCI (of another TB).

Meanwhile, a base station may include a total DAI for G-RNTI transmission in UL DCI in which CRC is scrambled with a C-RNTI. For example, if UL DCI is transmitted after transmitting two group common DCI, a total DAI of UL DCI may have a value of 1. Alternatively, if UL DCI is transmitted immediately after PTP retransmission, a total DAI of UL DCI may have a value of 2. In other words, considering a case in which a terminal does not receive DL DCI transmitted immediately before UL DCI, a base station may indicate a total DAI for UCI transmission of a PUSCH with UL DCI.

FIG. 8 is a diagram for describing a HARQ-ACK transmission method of a terminal according to an embodiment of the present disclosure.

In S810, a terminal may receive DCI including DAI information and scheduling PUSCH transmission from a network.

DAI information may include at least one bit.

For example, if a semi-static (or type-1) HARQ-ACK codebook is configured for both unicast and multicast, DAI information may include one bit associated with a HARQ-ACK codebook for both unicast and multicast. Here, whether to generate a HARQ-ACK codebook may be determined based on a value of corresponding one bit. For example, if that value is 1, a HARQ-ACK codebook may be generated, and if that value is 0, a HARQ-ACK codebook may be not generated.

Alternatively, if a semi-static (or type-1) HARQ-ACK codebook is configured for both unicast and multicast, DAI information may include a first one bit associated with unicast HARQ-ACK information and a second one bit associated with multicast HARQ-ACK information. For example, whether to generate unicast HARQ-ACK information may be determined based on a value of a first one bit. For example, if that value is 1, unicast HARQ-ACK information may be generated, and if that value is 0, unicast HARQ-ACK information may not be generated. In addition, whether to generate multicast HARQ-ACK information may be determined based on a value of a second one bit. For example, if that value is 1, multicast HARQ-ACK information may be generated, and if that value is 0, multicast HARQ-ACK information may not be generated.

Additionally or alternatively, a semi-static HARQ-ACK codebook may be configured for unicast, and a dynamic HARQ-ACK codebook may be configured for multicast. In this case, DAI information may include one bit associated with a unicast HARQ-ACK codebook and two bits associated with multicast HARQ-ACK information. For example, whether to generate the unicast HARQ-ACK codebook may be determined based on a value of one bit associated with a unicast HARQ-ACK codebook. For example, if that value is 1, a unicast HARQ-ACK codebook may be generated, and if that value is 0, a unicast HARQ-ACK codebook may not be generated. In addition, the number related to the multicast HARQ-ACK information may be determined based on a value of two bits associated with multicast HARQ-ACK information. For example, if two bit positions of two bits are 00, 01, 01, 11 (or a value indicated by two bits is 1, 2, 3, 4), it may correspond to information about the number of HARQ-ACK information bits in a multicast HARQ-ACK codebook or the number related thereto, respectively.

Additionally or alternatively, a dynamic HARQ-ACK codebook may be configured for unicast and a semi-static HARQ-ACK codebook may be configured for multicast. In this case, DAI information may include two bits associated with unicast HARQ-ACK information and one bit associated with a multicast HARQ-ACK codebook. For example, the number related to unicast HARQ-ACK information may be determined based on a value of two bits associated with unicast HARQ-ACK information. For example, if two bit positions of two bits are 00, 01, 01, 11 (or a value indicated by two bits is 1, 2, 3, 4), it may correspond to information about the number of HARQ-ACK information bits in a unicast HARQ-ACK codebook or the number related thereto, respectively. In addition, whether to generate a multicast HARQ-ACK codebook may be determined based on a value of one bit associated with a multicast HARQ-ACK codebook. For example, if that value is 1, a multicast HARQ-ACK codebook may be generated, and if that value is 0, a multicast HARQ-ACK codebook may not be generated.

In S820, a terminal may generate a HARQ-ACK codebook based on DAI information.

For example, based on DAI information, a terminal may or may not generate a HARQ-ACK codebook for a specific cast type (e.g., unicast or multicast), or may generate a HARQ-ACK codebook but may or may not generate HARQ-ACK information about a specific cast type.

In S830, a terminal may multiplex HARQ-ACK information in a PUSCH based on a HARQ-ACK codebook and transmit it to a network.

FIG. 9 is a diagram for describing a HARQ-ACK reception method of a base station according to an embodiment of the present disclosure.

In S910, a base station may transmit DCI including DAI information and scheduling PUSCH transmission to a terminal.

In S920, a base station may receive HARQ-ACK information multiplexed in a PUSCH from a terminal based on a HARQ-ACK codebook generated by a terminal based on DAI information.

In an example of FIG. 9, examples described by referring to FIG. 8 may be applied equally to a configuration of DAI information, and whether to generate a HARQ-ACK codebook associated therewith and/or whether to generate HARQ-ACK information, so an overlapping description is omitted.

Various examples of a structure of DAI included in UL DCI including the above-described contents that may be applied to an example of FIG. 8 and FIG. 9 are described below.

Unicast HARQ-ACK and multicast HARQ-ACK of the same priority may be multiplexed on the same PUSCH. In this case, DCI scheduling a PUSCH may include DAI field(s) in the following format. A DAI included in UL DCI may also be referred to as an UL DAI.

The following examples may be distinguished depending on a type of a unicast HARQ-ACK codebook and a type of a multicast HARQ-ACK codebook.

The first assumption is a case in which both a unicast HARQ-ACK codebook and a multicast HARQ-ACK codebook are configured as type-1 (i.e., a semi-static size).

In this case, 1-bit information included in UL DAI (or an UL DAI consists of 1-bit-sized fields) may indicate whether unicast HARQ-ACK and multicast HARQ-ACK are multiplexed on the same PUSCH. For example, if a value of a 1-bit UL DAI is a first value (e.g., 1), it may indicate that a unicast HARQ-ACK codebook and a multicast HARQ-ACK codebook are multiplexed on the same PUSCH. If a value of an UL DAI is a second value (e.g., 0), it may indicate that a unicast HARQ-ACK codebook and a multicast HARQ-ACK codebook are not multiplexed on the same PUSCH.

As another example, each bit of 2-bit information included in an UL DAI (or an UL DAI consists of 2-bit-sized fields) may separately indicate whether a unicast HARQ-ACK codebook and/or a multicast HARQ-ACK codebook are multiplexed on the same PUSCH. For example, if a first bit position value of a 2-bit UL DAI is a first value (e.g., 1), it may indicate that a unicast HARQ-ACK codebook is multiplexed on the same PUSCH. If a first bit position value of an UL DAI is a second value (e.g., 0), it may indicate that a unicast HARQ-ACK codebook is not multiplexed on the same PUSCH. For example, if a second bit position value of a 2-bit UL DAI is a first value (e.g., 1), it may indicate that a multicast HARQ-ACK codebook is multiplexed on the same PUSCH. If a second bit position value of an UL DAI is a second value (e.g., 0), it may indicate that a multicast HARQ-ACK codebook is not multiplexed on the same PUSCH.

For example, if only one sub-codebook is generated for all configured G-RNTIs, one bit of a 2-bit UL DAI (e.g., a second bit position) may indicate whether multicast HARQ-ACK codebooks applied to all configured G-RNTIs are multiplexed on the same PUSCH.

For example, when N different sub-codebooks are generated for N different G-RNTIs, one bit of a 2-bit UL DAI (e.g., a second bit position) may indicate whether a multicast HARQ-ACK sub-codebook applied only to one of the configured G-RNTIs is multiplexed on the same PUSCH. Here, one G-RNTI may be a G-RNTI that has a high priority, ot that is indicated by a network, or that corresponds to the latest (or most recently) scheduled PDSCH.

As another example, each bit of N+1-bit information included in an UL DAI (or an UL DAI consists of N+1-bit-sized fields) may separately indicate whether each of a unicast HARQ-ACK codebook and/or a multicast HARQ-ACK codebook is multiplexed on the same PUSCH.

For example, if N different sub-codebooks are generated for N different G-RNTIs, each of N bits among the N+1 bits may indicate whether a multicast HARQ-ACK codebook applied to each of the configured G-RNTIs is multiplexed on the same PUSCH. In other words, N bits among the N+1 bits of an UL DAI may be associated with a multicast HARQ-ACK codebook, and each of N bits may indicate whether a multicast HARQ-ACK sub-codebook for one of the G-RNTIs is multiplexed on the same PUSCH.

For example, if a first bit position value of a 3-bit UL DAI is a first value (e.g., 1), it may indicate that a unicast HARQ-ACK codebook is multiplexed on the same PUSCH. If a first bit position value of an UL DAI is a second value (e.g., 0), it may indicate that a unicast HARQ-ACK codebook is not multiplexed on the same PUSCH. For example, if a second bit position value of a 3-bit UL DAI is a first value (e.g., 1), it may indicate that a first multicast HARQ-ACK sub-codebook is multiplexed on the same PUSCH. If a second bit position value of an UL DAI is a second value (e.g., 0), it may indicate that a first multicast HARQ-ACK sub-codebook is not multiplexed on the same PUSCH. For example, if a third bit position value of a 3-bit UL DAI is a first value (e.g., 1), it may indicate that a second multicast HARQ-ACK sub-codebook is multiplexed on the same PUSCH. If a third bit position value of an UL DAI is a second value (e.g., 0), it may indicate that a second multicast HARQ-ACK sub-codebook is not multiplexed on the same PUSCH.

The second assumption is a case in which both a unicast HARQ-ACK codebook and a multicast HARQ-ACK codebook are configured as type-2 (i.e., a dynamic size)

In this case, 2-bit information included in an UL DAI (or an UL DAI consists of 2-bit-sized fields) may be applied to both a unicast HARQ-ACK codebook and a multicast HARQ-ACK codebook. For a dynamic type of HARQ-ACK codebook, a DAI value may indicate the number related to HARQ-ACK information (e.g., the number of PDSCH transmissions for which HARQ-ACK information is generated, PDCCHs indicating SPS PDSCH release, etc.).

As another example, first 2-bit information included in an UL DAI may be applied to multicast, and second 2-bit information may be applied to unicast.

For example, one UL DAI may be applied to all G-RNTIs, or an individual UL DAI may be applied to each configured G-RNTI.

The third assumption is a case in which a unicast HARQ-ACK codebook is configured as type-1 (i.e., a semi-static size) and a multicast HARQ-ACK codebook is configured as type-2 (i.e., a dynamic size).

In this case, 1-bit information included in an UL DAI may be applied to unicast, and 2-bit information may be applied to multicast. For example, among 3-bit information included in an UL DAI in DCI (e.g., an UL DAI consists of 3-bit-sized fields), one bit may be associated with unicast, and two bits may be associated with multicast.

For example, 1-bit information of an UL DAI may indicate whether a unicast HARQ-ACK codebook is multiplexed on the same PUSCH. For example, if a value of 1-bit information of an UL DAI is a first value (e.g., 1), it may indicate that a unicast HARQ-ACK codebook is multiplexed on the same PUSCH. If a value of 1-bit information is a second value (e.g., 0), it may indicate that a unicast HARQ-ACK codebook is not multiplexed on the same PUSCH.

2-bit information of an UL DAI may indicate the number related to multicast HARQ-ACK information (e.g., the number of PDSCH transmissions for which HARQ-ACK information is generated, PDCCHs indicating SPS PDSCH release, etc.). For example, 2-bit information of an UL DAI may indicate the number of HARQ-ACK information bits for a type-2 multicast HARQ-ACK codebook.

The fourth assumption is a case in which a unicast HARQ-ACK codebook is configured as type-2 (i.e., a dynamic size) and a multicast HARQ-ACK codebook is configured as type-1 (i.e., a semi-static size).

In this case, 1-bit information included in an UL DAI may be applied to multicast, and 2-bit information may be applied to unicast. For example, among 3-bit information included in an UL DAI in DCI (e.g., an UL DAI consists of 3-bit-sized fields), one bit may be associated with multicast, and two bits may be associated with unicast.

For example, 1-bit information of an UL DAI may indicate whether a multicast HARQ-ACK codebook is multiplexed on the same PUSCH. For example, if a value of 1-bit information of an UL DAI is a first value (e.g., 1), it may indicate that a multicast HARQ-ACK codebook is multiplexed on the same PUSCH. If a value of 1-bit information is a second value (e.g., 0), it may indicate that a multicast HARQ-ACK codebook is not multiplexed on the same PUSCH.

For example, if only one sub-codebook is generated for all configured G-RNTIs, one bit of a 3-bit UL DAI may indicate whether multicast HARQ-ACK codebooks applied to all configured G-RNTIs are multiplexed on the same PUSCH.

For example, if N different sub-codebooks are generated for N different G-RNTIs, one bit of a 3-bit UL DAI may indicate whether a multicast HARQ-ACK sub-codebook applied only to one G-RNTI among the configured G-RNTIs is multiplexed on the same PUSCH. Here, one G-RNTI may be a G-RNTI that has a high priority, ot that is indicated by a network, or that corresponds to the latest (or most recently) scheduled PDSCH.

2-bit information of an UL DAI may indicate the number related to unicast HARQ-ACK information (e.g., the number of PDSCH transmissions for which HARQ-ACK information is generated, PDCCHs indicating SPS PDSCH release, etc.). For example, 2-bit information of an UL DAI may also indicate the number of HARQ-ACK information bits for a type-2 unicast HARQ-ACK codebook.

Embodiment 3

This embodiment relates to a method for configuring UL DCI by separating a total DAI for unicast and a total DAI for multicast.

Here, UL DCI may include a multicast total DAI for multicast HARQ-ACK separately from a unicast total DAI for unicast HARQ-ACK as follows.

Embodiment 3-1

A plurality of bits of a DAI field of UL DCI may separately indicate a unicast total DAI and a multicast total DAI, respectively.

For example, N LSB bits and M MSB bits of a first DAI field or a second DAI field of DCI 0_1 may separately indicate a unicast total DAI and a multicast total DAI, respectively. Alternatively, N MSB bits and M LSB bits of a first DAI field or a second DAI field of DCI 0_1 may separately indicate a unicast total DAI and a multicast total DAI, respectively.

Embodiment 3-2

A reserved field or a specific field of UL DCI may indicate a multicast total DAI.

For example, a ChannelAccess-CPext field of DCI 0_1 may indicate a multicast total DAI.

If a terminal is receiving a PDSCH for a plurality of G-RNTIs, UL DCI may indicate a multicast total DAI value as follows.

Option 1: The sum of total DAI values may be indicated for all G-RNTIs that a corresponding terminal wants to receive or reported as being interested.

For example, if a terminal reports to a base station to receive G-RNTI#1 and G-RNTI#2, a current total DAI for G-RNTI#1 is 2 and a current total DAI for G-RNTI#2 is 3, a total DAI of UL DCI may indicate 5, which is 2+3.

Option 2: An individual total DAI value for each G-RNTI that a corresponding terminal wants to receive or reported as being interested may be indicated. In other words, a total DAI value for each G-RNTI may be indicated.

For example, if a terminal reports to a base station to receive G-RNTI#1 and G-RNTI#2, a current total DAI for G-RNTI#1 is 2 and a current total DAI for G-RNTI#2 is 3, UL DCI may separately include two total DAIs and indicate 2 and 3, respectively.

An individual total DAI value may be indicated through one field, and a plurality of total DAI values may be concatenated within one field to configure one bit string or bitmap. For example, if each of different total DAI values for two G-RNTIs is N bits, a bit string or a bitmap may be configured so that a total DAI value for a low G-RNTI value corresponds to N LSB bits or N MBS bits and a total DAI value for a high G-RNTI value corresponds to N MSB bits or N LBS bits.

It may be impossible to indicate a separate total DAI value for all G-RNTIs due to a limited field size, etc. In this case, a base station may indicate a total DAI for each G-RNTI as follows.

Option 2-1: A total DAI for each G-RNTI may be indicated only by the maximum number of G-RNTIs.

For example, when the maximum number of G-RNTIs is configured as 2 through a RRC message, if a terminal reported to a base station to receive G-RNTI#1, G-RNTI#2 and G-RNTI#3, a base station may configure UL DCI to indicate only total DAIs for two G-RNTIs having a high or low G-RNTI value among them, respectively.

Alternatively, when the maximum number of G-RNTIs is configured as 2 through a RRC message, if a terminal reported to a base station to receive G-RNTI#1, G-RNTI#2 and G-RNTI#3, a base station may configure UL DCI to indicate only total DAIs for two G-RNTIs with a high priority among them, respectively.

Alternatively, when the maximum number of G-RNTIs is configured as 2 through a RRC message, if a terminal reported to a base station to receive G-RNTI#1, G-RNTI#2 and G-RNTI#3, a base station may configure UL DCI to indicate only total DAIs for two G-RNTIs pre-designated by a RRC message among them, respectively.

Option 2-2: A total DAI for each G-RNTI may be indicated only for some selected G-RNTIs.

For example, if a terminal reported to a base station to receive G-RNTI#1, G-RNTI#2 and G-RNTI#3, a base station may configure UL DCI to indicate only total DAIs for two G-RNTIs notified to a terminal by a RRC message. Accordingly, a total DAI for an unselected G-RNTI may not be included in UL DCI.

Alternatively, if a terminal reported to a base station to receive G-RNTI#1, G-RNTI#2 and G-RNTI#3, a terminal may recognize (or expect) that only total DAIs for two G-RNTIs having a high or low G-RNTI value are indicated by UL DCI even if a base station does not inform it.

Alternatively, if a terminal reported to a base station to receive G-RNTI#1, G-RNTI#2 and G-RNTI#3, a terminal may recognize (or expect) that only total DAIs for G-RNTIs with a high priority (e.g., HP) are indicated by UL DCI even if a base station does not inform it.

Option 3: Among the individual total DAI values for each G-RNTI that a corresponding terminal wants to receive or reported as being interested, only a total DAI value with the highest value may be indicated.

For example, if a terminal reports to a base station to receive G-RNTI#1 and G-RNTI#2, a current total DAI for G-RNTI#1 is 2 and a current total DAI for G-RNTI#2 is 3, UL DCI may indicate 3, which has the highest total DAI value among the two. Here, UL DCI may additionally indicate an index for G-RNTI#2 (i.e., a G-RNTI associated with the highest total DAI value).

Option 4: All G-RNTIs that a corresponding terminal wants to receive or reported as being interested are grouped into a plurality of G-RNTI groups, and a total DAI is indicated for each G-RNTI group. One G-RNTI group may include at least one G-RNTI.

For example, if a terminal reported to a base station to receive G-RNTI#1, G-RNTI#2 and G-RNTI#3, a base station may designate G-RNTI#1 and G-RNTI#2 as a first G-RNTI group and G-RNTI#3 as a second G-RNTI group through a RRC message. Afterwards, a base station may configure UL DCI to indicate total DAIs for each of two G-RNTI groups.

Here, a total DAI value of a first G-RNTI group may indicate the sum of total DAI values for all G-RNTIs within a group, as in Option 1.

Alternatively, a total DAI value of a first G-RNTI group may indicate the highest total DAI value for all G-RNTIs within a group, as in Option 3.

Here, a total DAI value of a second G-RNTI group including only one G-RNTI is the same as a total DAI value of G-RNTI#3.

If there is a total DAI value of a G-RNTI that is missing according to this total DAI indication method of UL DCI, a terminal may configure a type-2-based HARQ-ACK codebook only based on a total DAI of DL DCI.

Embodiment 4

This embodiment relates to a method for configuring UL DCI combining a unicast total DAI and a multicast total DAI.

For example, UL DCI may give an indication as follows by combining a unicast total DAI for unicast HARQ-ACK and a multicast total DAI for multicast HARQ-ACK. Meanwhile, instead of UL DCI, a DAI value in the following methods may be transmitted through a group common MAC CE. Here, a PDSCH resource transmitting a group common MAC CE may be allocated by UL DCI.

Option 1: The sum of a total DAI value for unicast transmission and a total DAI value of all G-RNTIs that a corresponding terminal wants to receive or reported as being interested may be indicated.

For example, if a terminal reports to a base station to receive G-RNTI#1 and G-RNTI#2, a current total DAI for G-RNTI#1 is 2, a current total DAI for G-RNTI#2 is 3 and a current total DAI for unicast is 1, a total DAI of UL DCI may indicate 6, which is 2+3+1.

Option 2: An individual total DAI value for each G-RNTI that a corresponding terminal wants to receive or reported as being interested and a total DAI value for unicast may be indicated separately. In other words, a total DAI value for each G-RNTI and a total DAI value for unicast may be indicated, respectively.

For example, if a terminal reports to a base station to receive G-RNTI#1 and G-RNTI#2, a current total DAI for G-RNTI#1 is 2, a current total DAI for G-RNTI#2 is 3 and a current total DAI for unicast is 1, UL DCI may separately include three total DAIs and indicate 2, 3, 1, respectively.

An individual total DAI value may be indicated through one field, and a plurality of total DAI values may be concatenated within one field to configure one bit string or bitmap. For example, if each of different total DAI values for two G-RNTIs is N bits, a bit string or a bitmap may be configured so that a total DAI value for a low G-RNTI value corresponds to N LSB bits or N MBS bits and a total DAI value for a high G-RNTI value corresponds to N MSB bits or N LBS bits. In addition, a final bit string or bitmap may be configured by concatenating a unicast total DAI value.

It may be impossible to indicate all total DAI values due to a limited field size, etc. In this case, a base station may indicate a unicast total DAI and a total DAI for each G-RNTI as follows.

Option 2-1: A total DAI for each G-RNTI may be indicated only by the maximum number of G-RNTIs.

For example, when the maximum number of G-RNTIs is configured as 2 through a RRC message, if a terminal reported to a base station to receive G-RNTI#1, G-RNTI#2 and G-RNTI#3, a base station may configure UL DCI to indicate only total DAIs for two G-RNTIs having a high or low G-RNTI value among them, respectively. In addition, UL DCI may be configured to indicate or not to indicate a unicast total DAI together with an indication of a base station.

Alternatively, when the maximum number of G-RNTIs is configured as 2 by a RRC message, if a terminal reported to a base station to receive G-RNTI#1, G-RNTI#2 and G-RNTI#3, a base station may configure UL DCI to indicate only total DAI values for two G-RNTIs with a high priority among them, respectively. In addition, UL DCI may be configured to indicate or not to indicate a unicast total DAI together with an indication of a base station. Alternatively, UL DCI may be configured to indicate only total DAI(s) for unicast or a G-RNTI with a high priority according to the priority of unicast and G-RNTIs, respectively.

Alternatively, when the maximum number of G-RNTIs is configured as 2 by a RRC message, if a terminal reported to a base station to receive G-RNTI#1, G-RNTI#2 and G-RNTI#3, a base station may configure UL DCI to indicate only total DAI values for two G-RNTIs pre-designated by a RRC message among them, respectively. In addition, UL DCI may be configured to indicate or not to indicate a unicast total DAI together with an indication of a base station.

Option 2-2: Only for some selected G-RNTIs, the G-RNTI-specific total DAI can be indicated. In addition, UL DCI may be configured to indicate or not to indicate a unicast total DAI together with an indication of a base station.

For example, if a terminal reported to a base station to receive G-RNTI#1, G-RNTI#2 and G-RNTI#3, a base station may configure UL DCI to indicate only total DAIs for two G-RNTIs notified to a terminal by a RRC message.

Accordingly, a total DAI for an unselected G-RNTI may not be included in UL DCI. In addition, UL DCI may be configured to indicate or not to indicate a unicast total DAI together with an indication of a base station.

Alternatively, if a terminal reported to a base station to receive G-RNTI#1, G-RNTI#2 and G-RNTI#3, a terminal may recognize (or expect) that only total DAIs for two G-RNTIs having a high or low G-RNTI value are indicated by UL DCI even if a base station does not inform it. In addition, UL DCI may be configured to indicate or not to indicate a unicast total DAI together with an indication of a base station.

Alternatively, if a terminal reported to a base station to receive G-RNTI#1, G-RNTI#2 and G-RNTI#3, a terminal may recognize (or expect) that only total DAIs for G-RNTIs with a high priority (e.g., HP) are indicated by UL DCI even if a base station does not inform it. In addition, UL DCI may be configured to indicate or not to indicate a unicast total DAI together with an indication of a base station. Alternatively, according to a priority for unicast and G-RNTIs, it may be recognized (or expected) that only total DAI(s) for unicast or a G-RNTI with a high priority (e.g., HP) are indicated by UL DCI.

Option 3: Only a total DAI value having the highest value among the unicast DAI values and individual total DAI values for each G-RNTI that a corresponding terminal wants to receive or reported as being interested may be indicated.

For example, if a terminal reports to a base station to receive G-RNTI#1 and G-RNTI#2, a current total DAI for G-RNTI#1 is 2, a current total DAI for G-RNTI#2 is 3 and a unicast total DAI is currently 1, UL DCI may indicate 3, which has the highest total DAI value. Here, UL DCI may additionally indicate an index for G-RNTI#2 (i.e., a G-RNTI with the highest total DAI value).

Alternatively, if a terminal reports to a base station to receive G-RNTI#1 and G-RNTI#2, a current total DAI for G-RNTI#1 is 2, a current total DAI for G-RNTI#2 is 3 and a unicast total DAI is currently 4, UL DCI may indicate 4, which has the highest total DAI value. Here, UL DCI may additionally indicate an index for a unicast-related element (i.e., having the highest total DAI value).

Option 4: All G-RNTIs that a corresponding terminal wants to receive or reported as being interested are grouped into a plurality of G-RNTI groups and a total DAI is indicated for each G-RNTI group. In addition, UL DCI may be configured to indicate or not to indicate a unicast total DAI together with an indication of a base station. Alternatively, a unicast total DAI may be configured to be included in a specific G-RNTI group. Here, one G-RNTI group may include at least one element (here, an element is a G-RNTI or a unicast-related element).

For example, if a terminal reported to a base station to receive G-RNTI#1, G-RNTI#2 and G-RNTI#3, a base station may designate G-RNTI#1 and G-RNTI#2 as a first group and G-RNTI#3 and unicast as a second group by a RRC message. A base station may configure UL DCI to indicate total DAIs for two groups, respectively.

Here, a total DAI value of each group may indicate the sum of all total DAI values in a group as in Option 1.

Alternatively, a total DAI value of each group may indicate the highest total DAI value in a group as in Option 3.

Embodiment 5

This embodiment relates to a type-2 codebook configuration method according to HARQ-ACK deactivation.

HARQ-ACK transmission for PDSCH reception of a specific G-RNTI may be activated or deactivated by a RRC configuration or an indication of group common DCI.

If HARQ-ACK transmission for a specific G-RNTI is deactivated by a RRC configuration, a terminal may determine that a total DAI for a specific G-RNTI is not included in UL DCI. Meanwhile, if HARQ-ACK transmission for a specific G-RNTI is deactivated through DCI, a terminal may determine that a total DAI for a specific G-RNTI is included in UL DCI, considering a case in which a terminal may not receive corresponding DCI. Alternatively, even if HARQ-ACK transmission for a specific G-RNTI is deactivated through DCI, a terminal may determine that a total DAI for a specific G-RNTI is not included in UL DCI.

In an operation as above, UL DCI may be replaced with one of DL DCI that is CRC-scrambled with a corresponding G-RNTI, or DL DCI that schedules PTP transmission of a TB for a corresponding G-RNTI.

For group-common DCI indicating HARQ-ACK activation/deactivation (or enable/disable), in generating a type-2 HARQ-ACK codebook, a terminal may expect that all HARQ-ACK feedbacks for all PDSCHs which will be transmitted in the same PUCCH slot are enabled or disabled. If all HARQ-ACK feedbacks for all PDSCHs for this PUCCH slot are not equally disabled, a terminal may determine that all DAIs for all corresponding PDSCHs are enabled, configuring a type-2 codebook.

Accordingly, regardless of whether HARQ-ACK is enabled or disabled, HARQ-ACK information bits of a type-2 codebook may be configured by interpreting/assuming that all DAIs for all PDSCHs are enabled.

Alternatively, HARQ-ACK information bits of a type-2 codebook may be configured only for actually enabled HARQ-ACK.

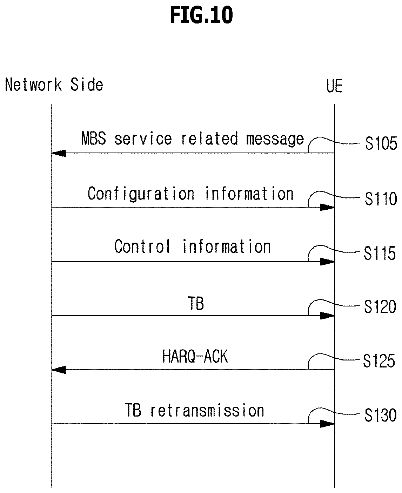

FIG. 10 is a diagram for illustrating a signaling procedure of the network side and the terminal according to an embodiment of the present disclosure.

FIG. 10 shows an example of signaling between a network side and a terminal (UE) in a situation to which the examples (e.g., embodiments 1, 2, 3, 4, 5 or its detailed examples, and a combination of one or more thereof) of the present disclosure described above may be applied.

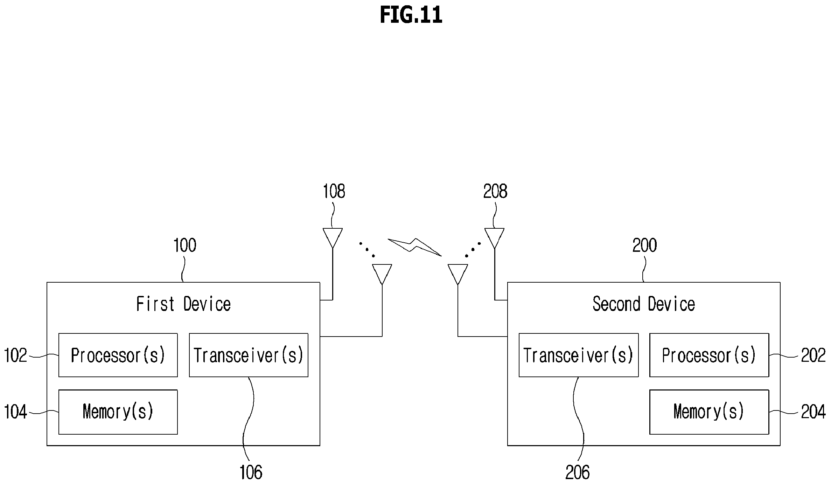

Here, the UE/network side is exemplary, and may be replaced with various devices to be described with reference to FIG. 11. FIG. 10 is for convenience of description, and does not limit the scope of the present disclosure. Also, some step(s) shown in FIG. 10 may be omitted depending on circumstances and/or settings. In addition, in the operation of the network side/UE of FIG. 10, the above-described uplink transmission/reception operation and the like may be referred to or used.

In the following description, the network side may be one base station including a plurality of TRPs, or may be one cell including a plurality of TRPs. Alternatively, the network side may include a plurality of remote radio heads (RRHs)/remote radio units (RRUs). As an example, an ideal/non-ideal backhaul may be configured between TRP 1 and TRP 2 included in the network side. In addition, although the following description is based on a plurality of TRPs, such description may be equivalently extended and applied to transmission through a plurality of panels/cells, and may also be extended and applied to transmission through a plurality of RRHs/RRUs.

In addition, although described with reference to "TRP" in the following description, "TRP" may be replaced with and applied to a panel, an antenna array, a cell (e.g., a macro cell/small cell/pico cell, etc.), TP (transmission point), base station (base station, gNB, etc.) as described above. As described above, the TRP may be distinguished according to information (e.g., CORESET index, ID) on the CORESET group (or CORESET pool).

As an example, when one UE is configured to perform transmission and reception with a plurality of TRPs (or cells), this may mean that a plurality of CORESET groups (or CORESET pools) are configured for the one UE. The configuration of such CORESET group (or CORESET pool) may be performed through higher layer signaling (e.g., RRC signaling, etc.).

In addition, the base station may mean a generic term for an object that transmits/receives data to and from the UE. For example, the base station may be a concept including one or more TPs (Transmission Points), one or more TRPs (Transmission and Reception Points), or the like. In addition, the TP and/or TRP may include a panel, a transmission and reception unit, and the like of the base station.

The UE may enter the RRC_CONNECTED mode, and may report a message indicating one or more interested MBS services to the network side (S105).

Here, the UE may transmit the message to the network side through at least one of UCI, MAC CE (Control Element), or RRC message. In addition, the MBS service of interest in the message may mean one of TMGI and G-RNTI listed in a DL message received from the network side.

For example, the DL message may be a service availability message listing TMGI #1, TMGI #3, TMGI #5, and TMGI #10. When the UE is interested in TMGI #5, the UE may indicate the order of TMGI #5 in the message. That is, the terminal may report '3' to the network side.

As an additional example, the DL message may be a service availability message listing G-RNTI #1, G-RNTI #3, G-RNTI #5, and G-RNTI #10. When the UE is interested in G-RNTI #10, the UE may indicate the order of G-RNTI #10 in the message. That is, the UE may report '4' to the network side.

For example, the operation of the UE (100 or 200 in FIG. 11) of the above-described step S105 transmitting the message to the network side (200 or 100 in FIG. 11) may be implemented by the device of FIG. 11 to be described below. For example, referring to FIG. 11, the one or more processors 102 may control one or more transceivers 106 and/or one or more memories 104, etc. to transmit the message, and the one or more transceivers 106 may transmit the message to the network side.

Upon receiving the message, the network side may transmit configuration information to the UE by an RRC message (S110).

For example, the configuration information may include CFR (common frequency resource) configuration information, one or more group common PDSCH configuration information including TCI states for one or more G-RNTI values, search space configuration information including TCI states for one or more G-RNTI values.

Here, the RRC message may be a group common message transmitted through a PTM MCCH (Multicast Control Channel) or a UE-dedicated message transmitted through a UE-specific DCCH (Dedicated Control Channel).

In addition, CFR may include DL CFR and UL CFR. For example, one DL CFR may provide group common PDCCH and group common PDSCH transmission resources for MBS transmission or reception. One UL CFR may provide HARQ-ACK PUCCH resources for group common PDSCH reception. One CFR may be one MBS-specific BWP or one UE-specific BWP. Additionally or alternatively, one or a plurality of CFRs may be configured in one UE-specific BWP. One CFR may have a linkage relationship with one UE-specific BWP.

The terminal may be configured with at least a G-RNTI value for each MBS CFR or each serving cell. GC-CS-RNTI may be configured/used for activation, retransmission or release of one or more group common SPS configurations.

When the UE is not configured with GC-CS-RNTI for CFR or serving cell, and CS-RNTI is configured for CFR or serving cell, the UE may use CS-RNTI for activating, retransmitting, or releasing of one or more group common SPS configurations.

The network side may associate one GC-CS-RNTI value with a TMGI list or a G-RNTI list. In this case, the network side may provide a TMGI list or a G-RNTI list associated with the GC-CS-RNTI value.

In addition, configuration information of each PDSCH (e.g., 'PDSCH-config') may be configured as shown in Table 6 as a minimum information element for multicast and/or broadcast.

【Table 6】

```
PDSCH-Config ::= SEQUENCE {
dataScramblingIdentityPDSCH INTEGER (0..1023) OPTIONAL, -- Need S
dmrs-DownlinkForPDSCH-MappingTypeA SetupRelease { DMRS-DownlinkConfig }
OPTIONAL, -- Need M
dmrs-DownlinkForPDSCH-MappingTypeB SetupRelease { DMRS-DownlinkConfig }
OPTIONAL, -- Need M
tci-StatesToAddModList SEQUENCE (SIZE(1..maxNrofTCI-States)) OF TCI-State
OPTIONAL, -- Need N
tci-StatesToReleaseList SEQUENCE (SIZE(1..maxNrofTCI-States)) OF TCI-StateId
OPTIONAL, -- Need N
```

```
vrb-ToPRB-Interleaver ENUMERATED {n2, n4} OPTIONAL, -- Need S
resourceAllocation ENUMERATED { resourceAllocationType0,
resourceAllocationType1, dynamicSwitch},
pdsch-TimeDomainAllocationList SetupRelease { PDSCH-
TimeDomainResourceAllocationList } OPTIONAL, -- Need M
pdsch-AggregationFactor ENUMERATED { n2, n4, n8 } OPTIONAL, -- Need S
rateMatchPatternToAddModList SEQUENCE (SIZE (1..maxNrofRateMatchPatterns))
OF RateMatchPattern OPTIONAL, -- Need N
rateMatchPatternToReleaseList SEQUENCE (SIZE (1..maxNrofRateMatchPatterns))
OF RateMatchPatternId OPTIONAL, -- Need N
rateMatchPatternGroup1 RateMatchPatternGroup OPTIONAL, -- Need R
rateMatchPatternGroup2 RateMatchPatternGroup OPTIONAL, -- Need R
rbg-Size ENUMERATED {config1, config2},
mcs-Table ENUMERATED {qam256, qam64LowSE} OPTIONAL, -- Need S
maxNrofCodeWordsScheduledByDCI ENUMERATED {n1, n2}
... }
```

For example, the operation of the UE (100 or 200 in FIG. 11) of the above-described step S110 receiving configuration information from the network side (200 or 100 in FIG. 11) may be implemented by the device of FIG. 11 to be described below. For example, referring to FIG. 11, the one or more processors 102 may control one or more transceivers 106 and/or one or more memories 104, etc. to receive the configuration information, and the one or more transceivers 106 may receive the configuration information from the network side.

The UE may receive control information from the network side (S115). For example, the UE may receive downlink control information (DCI) for scheduling/activating/releasing uplink/downlink transmission from the network side.

Specifically, when the search space is configured for the configured CFR, the UE may monitor the PDCCH in the SS (search space) configured in the configured CFR, to receive DCI CRC scrambled with G-RNTI or G (group)-CS (configured scheduling)-RNTI.

For example, the operation of the UE (100 or 200 in FIG. 11) of the above-described step S115 receiving control information from the network side (200 or 100 in FIG. 11) may be implemented by the device of FIG. 11 to be described below. For example, referring to FIG. 11, the one or more processors 102 may control one or more transceivers 106 and/or one or more memories 104, etc. to receive the control information, and the one or more transceivers 106 may receive the control information from the network side.

The UE may receive the TB from the network side (S120).

Specifically, when the data unit is available on the MTCH of the MBS radio bearer (MRB) for the MBS service, the network side may construct and transmit a TB including the data unit for an SPS PDSCH occasion associated with the MTCH of the MRB for the MBS service, or associated with TMGI of the MBS service, or associated with a short ID of the MBS service, or associated with G-RNTI mapped to the MBS service, according to the service-to-resource mapping.

For group common dynamic scheduling of the TB, the network side may transmit DCI through PDCCH to the UE. The corresponding DCI may be CRC scrambled by G-RNTI, G-CS-RNTI, or CS-RNTI. The PDCCH may be implemented as a group common PDCCH or a UE-specific PDCCH.

For example, the DCI may include at least one of an identifier for the DCI format, a carrier indicator, a bandwidth part indicator, frequency domain resource assignment, time domain resource assignment, VRB-to-PRB mapping, PRB bundling size indicator, rate matching indicator, ZP CSI-RS trigger, MCS, NDI, RV, HARQ process number, downlink assignment index, TPC command for scheduled PUCCH, PUCCH resource indicator, PDSCH-to-HARQ_feedback timing indicator, an antenna port, a transmission configuration indication, an SRS request, a DMRS sequence initialization, or a priority indicator.

For group common dynamic scheduling, by group common or UE-specific RRC message or by group common or UE-specific MAC CE, the network side may provide with UE one or more of the service-resource mappings for the MBS service identified by TMGI or G-RNTI or GC-CS-RNTI. Data of the MBS service may be carried through MBS radio bearer (MRB) of a multicast traffic logical channel, that is, MTCH associated to the MBS service. RRC message may be a group common message transmitted through PTM MCCH (Multicast Control Channel) or UE-dedicated message transmitted through UE-specific DCCH (Dedicated Control Channel). The DCI scheduling PDSCH carrying the MBS service data may additionally indicate at least one of short ID, MTCH ID, MRB ID, G-RNTI value, and a TMGI value for the MBS service.

When receiving DCI CRC scrambled by G-RNTI that the UE is interested to receive, the UE may determine MBS service(s) associated with one or more of short ID, MTCH ID, MRB ID, G-RNTI value, and a TMGI value for each PDSCH occasion, based on mapping between MBS service and HPN indicated in the DCI, and/or mapping between MBS service and short ID(s) indicated in the DCI.

Then, when UE is interested in the determined MBS service(s), the UE may receive PDSCH transmission scheduled by the DCI. When the UE is not interested in the determined MBS service(s), UE may not receive PDSCH transmission scheduled by the DCI.

For example, the operation of the UE (100 or 200 in FIG. 11) of the above-described step S120 receiving the TB from the network side (200 or 100 in FIG. 11) may be implemented by the device of FIG. 11 to be described below. For example, referring to FIG. 11, the one or more processors 102 may control one or more transceivers 106 and/or one or more memories 104, etc. to receive the TB, and the one or more transceivers 106 may receive the TB from the network side.

Upon receiving group common DCI indicating PUCCH resource(s) for MBS HARQ-ACK, the UE may transmit HARQ-ACK through PUCCH after a PDSCH reception scheduled by the DCI (S125). That is, according to decoding status of PDSCH transmission, the UE may transmit HARQ feedback to the network side.

In the case of PTM scheme 1, group common DCI may indicate a single PUCCH resource indicator and a single PDSCH-to-HARQ_feedback timing indicator at least for ACK/NACK based HARQ-ACK.

Specifically, in the case of UE-specific PUCCH resource allocation for ACK/NACK based HARQ-ACK for group common DCI, different UEs in the corresponding group (unless 'PUCCH-config' for multicast is configured) may be configured with different values of at least 'PUCCH-Resource' and 'dl-DataToUL-ACK' in UE-dedicated 'PUCCH-config' for multicast or for unicast. Different UEs may be allocated with different PUCCH resources, by the same PUCCH resource indicator and the same 'PDSCH-to-HARQ_feedback timing indicator of the group common DCI.

In the case of PTP retransmission, the PUCCH resource indicator and the PDSCH-to-HARQ_feedback timing indicator in the UE-specific DCI may be interpreted based on 'PUCCH-config' for unicast, regardless of whether 'PUCCH-config' for multicast is configured or not.

Here, PRI (PUCCH Resource Indicator) may be indicated by group common DCI as follows.

As an example, UE-specific PRI list may be included in the DCI (option 1A-1). Each PRI in the corresponding list may indicate an entry corresponding to a candidate 'pucch-ResourceId' value of 'PUCCH-config' for allocation of the same PUCCH resource or different PUCCH resources for different UEs in the group receiving the same DCI. Different PRI of DCI may indicate different entry in 'PUCCH-config.'

Here, a candidate 'pucch-ResourceId; value may be configured by RRC, and a different 'pucch-ResourceId' value may be configured for a different UE in the same group at least in multicast PUCCH-config.

As an additional example, a group common PRI may be included in the DCI (option 1-A-2). A single group common PRI may indicate a specific entry for a candidate 'pucch-ResourceId' value in UE-specific 'PUCCH-config' for allocation of the same or different PUCCH resources for all UEs in the group.

In addition, a candidate 'pucch-ResourceId' value may be configured by RRC. Different 'pucch-ResourceId' value may be configured for different UE in the same group at least in 'PUCCH-config' for multicast.

When 'PUCCH-config' for multicast is configured for HARQ-ACK for group common PDSCH scheduled by the group common DCI, the UE may assume that the PRI of the group common DCI indicates an entry corresponding to a candidate 'pucch-ResourceId' value in 'PUCCH-config' for multicast.

When 'PUCCH-config' for multicast is not configured for HARQ-ACK for group common PDSCH scheduled by the group common DCI, the UE may assume that the PRI of the group common DCI indicates an entry corresponding to a candidate 'pucch-ResourceId' value in 'PUCCH-config' for unicast.

K1 (PDSCH-to-HARQ_feedback timing indicator) may be indicated by group common DCI as follows.

As an example, UE-specific K1 value list may be included in the DCI (option 1B-1). Each K1 in the list may indicate the same UL slot or different UL (sub-)slot for different UE in the group.

For example, Different K1 values may be allocated to different UEs. That is, K1 may be allocated to UE1, K2 may be allocated to UE2, K3 may be allocated to UE3.

As an additional example, multiple UEs may share K1 value. For example, UE1 and UE2 may share K1 value, UE3 and UE4 may share K2 value.

As an additional example, one K1 value may be a reference, and other K1 value may be allocated based on the reference. {K1_ref, K1_offset list} may be indicated by DCI.

For example, UE1 may use K1_ref, UE2 may use K1_ref + K1_offset1, UE3 may use K1_ref + K1_offset2.

As an additional example, group common K1 value may be included in the DCI (option 1B-2). For example, a single K1 value may indicate an entry corresponding to a candidate 'dl-DataToUL-ACK' values in UE-specific 'PUCCH-config' for allocation of the same or different PUCCH resources for all UEs in the group receiving the DCI. This may be applied for the case that a DCI format is configured in UE-specific 'PUCCH-config' for the K1 value.

As an additional example, a candidate 'dl-DataToUL-ACK' value may be configured by RRC, and may be differently configured for different UE in the same group at least in 'PUCCH-config' for multicast.

As an additional example, when 'PUCCH-config' for multicast is configured for HARQ-ACK for group common PDSCH scheduled by group common DCI, UE may assume that K1 value of the group common DCI indicates an entry corresponding to a candidate 'dl-DataToUL-ACK' value in 'PUCCH-config' for multicast.

As an additional example, when 'PUCCH-config' for multicast is not configured for HARQ-ACK for group common PDSCH scheduled by group common DCI, UE may assume that K1 value of the group common DCI indicates an entry corresponding to a candidate 'dl-DataToUL-ACK' value in 'PUCCH-config' for unicast.

In addition, when the UE receives group common DCI CRC scrambled by G-RNTI and/or UE-specific DCI CRC scrambled by C-RNTI, and when Type-1 HARQ-ACK codebook is configured for 'PUCCH-config' for multicast and/or 'PUCCH-config' for unicast, UE may construct TDRA (Time Domain Resource Allocation) to generate Type-1 HARQ-ACK codebook for HARQ-ACK(s) for group common PDSCH scheduled by group common DCI and/or UE-specific PDSCH scheduled by UE-specific DCI.

When TB decoding in a PDSCH transmission occasion is not successful, UE may transmit HARQ NACK to the network side through a PUCCH resource in the configured UL CFR.

Using PUCCH resource, the UE may transmit HARQ-ACK for other PDSCH transmissions such as unicast SPS PDSCH, dynamic unicast PDSCH, PTP retransmission and/or dynamic group common PDSCH.

Here, for multiplexing HARQ-ACKs on PUCCH in a (sub)slot for SPS PDSCH for multicast, SPS PDSCH for unicast, dynamically scheduled multicast PDSCH, and/or dynamically scheduled unicast PDSCH, UE may construct a codebook based on one or more of the above options.

When RSRP threshold is configured, the UE may use NACK only based HARQ-ACK based on the measured RSRP of a serving cell. When the measured RSRP is higher than a threshold, NACK only based HARQ-ACK may be transmitted through group common PUCCH resource indicated by PRI of DCI. When the measured RSRP is lower than the threshold, NACK only based HARQ-ACK may be transformed into ACK/NACK based HARQ-ACK on UE-specific PUCCH resource indicated by PRI of DCI.

Meanwhile, when the 'pdsch-AggregationFactor' is configured for a G-RNTI or when 'repetition_number' is indicated by the network side by DCI, the TB scheduled by group common DCI may be repeated for Nth HARQ transmission of the TB within each symbol allocation among each of the 'pdsch-AggregationFactor' consecutive slots or among each of the 'repetition_number' consecutive slots, if configured.

For example, the operation of the UE (100 or 200 in FIG. 11) of the above-described step S125 transmitting the HARQ-ACK to the network side (200 or 100 in FIG. 11) may be implemented by the device of FIG. 11 to be described below. For example, referring to FIG. 11, the one or more processors 102 may control one or more transceivers 106 and/or one or more memories 104, etc. to transmit the HARQ-ACK, and the one or more transceivers 106 may transmit the HARQ-ACK to the network side.

Receiving HARQ NACK of a TCI state, the network side may retransmit, using the TCI state, PDCCH and PDSCH in the DL CFR configured for retransmission of TB (S130).

UE may monitor group common and/or UE-specific PDCCH using the TCI state for a search space configured in DL CFR to receive a retransmission of the TB. The network side may retransmit the TB to one of the UEs in the group by UE-specific PDCCH. Meanwhile, other UE(s) may not receive the retransmission of the TB, as it has successfully received the TB.

When the UE receives the PDCCH for the retransmission of the TB, the UE may receive the PDSCH scheduled by the DCI of the PDCCH. When the UE successfully decodes the TB in the PDSCH, the UE may consider that the decoded TB is associated with MTCH, MRB, TMGI, G-RNTI and/or short ID of MBS service, based on mapping between MBS service and HPN (HARQ Process Number) indicated by the DCI, and/or mapping between MBS service and short ID(s) indicated by the DCI.

When TB decoding in PDSCH transmission occasion is successful, the UE may transmit HARQ ACK to the network side through PUCCH resource in UL CFR configured according to the above-described procedure. Using PUCCH resource, the UE may transmit HARQ-ACK for other PDSCH transmission such as unicast SPS PDSCH, dynamic unicast PDSCH, PTP retransmission and/or dynamic group common PDSCH.

In this case, for multiplexing HARQ-ACKs on PUCCH in a (sub)slot for SPS PDSCH for multicast, SPS PDSCH for unicast, dynamically scheduled multicast PDSCH, and/or dynamically scheduled unicast PDSCH, the UE may construct a codebook based on one or more of the above-described options/embodiments.

For example, the operation of the UE (100 or 200 in FIG. 11) of the above-described step S130 receiving TB retransmission from the network side (200 or 100 in FIG. 11) may be implemented by the device of FIG. 11 to be described below. For example, referring to FIG. 11, the one or more processors 102 may control one or more transceivers 106 and/or one or more memories 104, etc. to receive TB retransmission, and the one or more transceivers 106 may receive TB retransmission from the network side.


General Device to which the Present Disclosure may be applied

FIG. 11 is a diagram which illustrates a block diagram of a wireless communication device according to an embodiment of the present disclosure.

In reference to FIG. 11, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods included in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned.

Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1.   A method performed by a terminal in a wireless communication system, the method comprising:

   receiving, from a network, downlink control information (DCI) including downlink allocation index (DAI) information of at least one bit and scheduling a physical uplink shared channel (PUSCH) transmission;
   generating a hybrid automatic repeat and request (HARQ)-acknowledgement (ACK) codebook based on the DAI information; and

multiplexing and transmitting HARQ-ACK information in the PUSCH based on the HARQ-ACK codebook to the network,

wherein based on a semi-static HARQ-ACK codebook being configured for both unicast and multicast, the DAI information includes one bit associated with a HARQ-ACK codebook for both unicast and multicast, or the DAI information includes a first one bit associated with unicast HARQ-ACK information and a second one bit associated with multicast HARQ-ACK information.

2. The method of Claim 1, wherein:
whether to generate the HARQ-ACK codebook is determined based on a value of the one bit associated with the HARQ-ACK codebook for both unicast and multicast.

3. The method of Claim 1, wherein:

whether to generate the unicast HARQ-ACK information is determined based on a value of the first one bit, whether to generate the multicast HARQ-ACK information is determined based on a value of the second one bit.

4. The method of Claim 1, wherein:
based on a semi-static HARQ-ACK codebook being configured for unicast, and a dynamic HARQ-ACK codebook being configured for multicast, the DAI information includes one bit associated with a unicast HARQ-ACK codebook and two bits associated with multicast HARQ-ACK information.

5. The method of Claim 4, wherein:

whether to generate the unicast HARQ-ACK codebook is determined based on a value of the one bit associated with the unicast HARQ-ACK codebook,
a number related to the multicast HARQ-ACK information is determined based on a value of the two bits associated with the multicast HARQ-ACK information.

6. The method of Claim 1, wherein:
based on a dynamic HARQ-ACK codebook being configured for unicast, and a semi-static HARQ-ACK codebook being configured for multicast, the DAI information includes two bits associated with a unicast HARQ-ACK codebook and one bit associated with multicast HARQ-ACK information.

7. The method of Claim 6, wherein:

a number related to the unicast HARQ-ACK information is determined based on a value of the two bits associated with the unicast HARQ-ACK codebook,
whether to generate the multicast HARQ-ACK codebook is determined based on a value of the one bit associated with the multicast HARQ-ACK information.

8. A terminal in a wireless communication system, the terminal comprising:

at least one transceiver; and
at least one processor connected to the at least one transceiver,
wherein the at least one processor includes:
receiving, through the at least one transceiver, from a network, downlink control information (DCI) including downlink allocation index (DAI) information of at least one bit and scheduling a physical uplink shared channel (PUSCH) transmission;
generating a hybrid automatic repeat and request (HARQ)-acknowledgement (ACK) codebook based on the DAI information; and
multiplexing and transmitting HARQ-ACK information in the PUSCH based on the HARQ-ACK codebook to the network through the at least one transceiver,
wherein based on a semi-static HARQ-ACK codebook being configured for both unicast and multicast, the DAI information includes one bit associated with a HARQ-ACK codebook for both unicast and multicast, or the DAI information includes a first one bit associated with unicast HARQ-ACK information and a second one bit associated with multicast HARQ-ACK information.

9. A method performed by a base station in a wireless communication system, the method comprising:

transmitting, to a terminal, downlink control information (DCI) including downlink allocation index (DAI) information of at least one bit and scheduling a physical uplink shared channel (PUSCH) transmission; and

based on a hybrid automatic repeat and request (HARQ)-acknowledgement (ACK) codebook generated by the terminal based on the DAI information, receiving HARQ-ACK information multiplexed in the PUSCH from the terminal,

wherein based on a semi-static HARQ-ACK codebook being configured for both unicast and multicast, the DAI information includes one bit associated with a HARQ-ACK codebook for both unicast and multicast, or the DAI information includes a first one bit associated with unicast HARQ-ACK information and a second one bit associated with multicast HARQ-ACK information.

10. A base station in a wireless communication system, the base station comprising:

at least one transceiver; and
at least one processor connected to the at least one transceiver,
wherein the at least one processor:

transmits, through the at least one transceiver, to a terminal, downlink control information (DCI) including downlink allocation index (DAI) information of at least one bit and scheduling a physical uplink shared channel (PUSCH) transmission; and

based on a hybrid automatic repeat and request (HARQ)-acknowledgement (ACK) codebook generated by the terminal based on the DAI information, receives, through the at least one transceiver, HARQ-ACK information multiplexed in the PUSCH from the terminal,

wherein based on a semi-static HARQ-ACK codebook being configured for both unicast and multicast, the DAI information includes one bit associated with a HARQ-ACK codebook for both unicast and multicast, or the DAI information includes a first one bit associated with unicast HARQ-ACK information and a second one bit associated with multicast HARQ-ACK information.

11. A processing unit configured to control a terminal in a wireless communication system, the processing unit comprising:

at least one processor; and
at least one computer memory which is operably connected to the at least one processor and stores instructions for performing a method according to any one of Claim 1 to Claim 7 based on being executed by the at least one processor.

12. At least one non-transitory computer readable medium storing at least one instruction, wherein:
the at least one instruction controls a device to perform a method according to any one of Claim 1 to Claim 7 in a wireless communication system by being executed by at least one processor.

# FIG.1

# FIG.2

Radio Frame 10ms

Subframe 1ms

| 0 | 1 | 2 | 3 | 4 | 5 | 6 | 7 | 8 | 9 |

} Fixed Size

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

} Size depends
on subcarrier
spacing

Mini-Slot
(URLLC)

Mini-Slot={2,4,7} Symbols

## FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

# FIG.5

**FIG.6**

INITIAL CELL SEARCH — PSS/SSS& [DLRS]& PBCH — S601

SYSTEM INFORMATION RECEPTION — PDCCH/ PDSCH (BCCH) — S602

RANDOM ACCESS PROCEDURE
- PRACH — S603
- PDCCH/ PDSCH — S604
- PUSCH — S605
- PDCCH/ PDSCH — S606

GENERAL DL/UL Tx/Rx
- PDCCH/ PDSCH — S607
- PUSCH/ PUCCH — S608

· DL/UL ACK/NACK
· UE CQI/PMI RI REPORT
  USING PUSCH AND PUCCH

# FIG.7

| C-RNTI DCI (HP/LP) | Unicast PDSCH | | ... | Unicast HARQ-ACK |
|---|---|---|---|---|

| | G-RNTI #1 DCI (HP/LP) | Multicast PDSCH | ... | Multicast HARQ-ACK 1 |
|---|---|---|---|---|

| G-RNTI #2 DCI (HP/LP) | Multicast PDSCH | | ... | Multicast HARQ-ACK 2 |
|---|---|---|---|---|

# FIG.8

| Receive DCI including DAI information and scheduling PUSCH transmission | ~ S810 |
|---|---|

↓

| Generate HARQ-ACK codebook based on DAI information | ~ S820 |
|---|---|

↓

| Multiplex and transmit HARQ-ACK information in PUSCH based on HARQ-ACK codebook | ~ S830 |
|---|---|

# FIG.9

| Transmit DCI including DAI information and scheduling PUSCH transmission | ~ S910 |
|---|---|

↓

| Receive HARQ-ACK information multiplexed in PUSCH, based on HARQ-ACK codebook generated based on DAI information | ~ S920 |
|---|---|

# FIG.10

Network Side UE

MBS service related message — S105

Configuration information — S110

Control information — S115

TB — S120

HARQ-ACK — S125

TB retransmission — S130

**FIG.11**

## INTERNATIONAL SEARCH REPORT

| International application No. |
|---|
| **PCT/KR2023/002008** |

**A. CLASSIFICATION OF SUBJECT MATTER**

**H04L 5/00**(2006.01)i; **H04L 1/18**(2006.01)i; **H04W 72/23**(2023.01)i; **H04W 4/06**(2009.01)i

According to International Patent Classification (IPC) or to both national classification and IPC

**B. FIELDS SEARCHED**

Minimum documentation searched (classification system followed by classification symbols)

H04L 5/00(2006.01); H04L 1/18(2006.01); H04W 4/40(2018.01); H04W 72/04(2009.01); H04W 74/08(2009.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DAI, PUSCH, DCI, HARQ-ACK 코드북(HARQ-ACK codebook), 유니캐스트 (unicast), 멀티캐스트(multicast)

**C. DOCUMENTS CONSIDERED TO BE RELEVANT**

| Category* | Citation of document, with indication, where appropriate, of the relevant passages | Relevant to claim No. |
|---|---|---|
| Y | WO 2021-018051 A1 (FG INNOVATION COMPANY LIMITED) 04 February 2021 (2021-02-04)<br>See paragraphs [0032]-[0033]; claims 1-2 and 7; and figure 1. | 1-3,8-12 |
| A | | 4-7 |
| Y | SAMSUNG. Correction to the introduction of multicast-broadcast services in NR. R1-2200814, 3GPP TSG RAN WG1 #107bis-e, e-Meeting. 02 February 2022.<br>See pages 3-4 and 22-23. | 1-3,8-12 |
| A | KR 10-2021-0145799 A (GUANGDONG OPPO MOBILE TELECOMMUNICATIONS CORP., LTD.) 02 December 2021 (2021-12-02)<br>See paragraphs [0072]-[0092]; and figure 7. | 1-12 |
| A | KR 10-2021-0006403 A (TELEFONAKTIEBOLAGET LM ERICSSON(PUBL)) 18 January 2021 (2021-01-18)<br>See paragraphs [0091]-[0100]; and figures 9-12. | 1-12 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 April 2023** | **01 May 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/002008** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2021-0097206 A (LG ELECTRONICS INC.) 06 August 2021 (2021-08-06)<br>See paragraphs [0609]-[0611]; and figure 44. | 1-12 |

Form PCT/ISA/210 (second sheet) (July 2022)

**INTERNATIONAL SEARCH REPORT**
Information on patent family members

International application No.

**PCT/KR2023/002008**

| Patent document cited in search report | | | Publication date (day/month/year) | Patent family member(s) | | | Publication date (day/month/year) |
|---|---|---|---|---|---|---|---|
| WO | 2021-018051 | A1 | 04 February 2021 | CN | 114144985 | A | 04 March 2022 |
| | | | | EP | 4005128 | A1 | 01 June 2022 |
| | | | | JP | 2022-541952 | A | 28 September 2022 |
| | | | | KR | 10-2022-0025036 | A | 03 March 2022 |
| | | | | US | 2022-0264614 | A1 | 18 August 2022 |
| KR | 10-2021-0145799 | A | 02 December 2021 | CN | 113302864 | A | 24 August 2021 |
| | | | | CN | 113794540 | A | 14 December 2021 |
| | | | | EP | 3934143 | A1 | 05 January 2022 |
| | | | | EP | 3934143 | A4 | 30 March 2022 |
| | | | | US | 2022-0014317 | A1 | 13 January 2022 |
| | | | | WO | 2020-220359 | A1 | 05 November 2020 |
| KR | 10-2021-0006403 | A | 18 January 2021 | CN | 112154619 | A | 29 December 2020 |
| | | | | EP | 3791501 | A2 | 17 March 2021 |
| | | | | JP | 2021-524184 | A | 09 September 2021 |
| | | | | JP | 2022-160490 | A | 19 October 2022 |
| | | | | US | 2021-0167900 | A1 | 03 June 2021 |
| | | | | WO | 2019-216816 | A2 | 14 November 2019 |
| | | | | WO | 2019-216816 | A3 | 14 May 2020 |
| KR | 10-2021-0097206 | A | 06 August 2021 | CN | 113366786 | A | 07 September 2021 |
| | | | | EP | 3907914 | A1 | 10 November 2021 |
| | | | | JP | 2022-518255 | A | 14 March 2022 |
| | | | | US | 2022-0109527 | A1 | 07 April 2022 |
| | | | | WO | 2020-153721 | A1 | 30 July 2020 |

Form PCT/ISA/210 (patent family annex) (July 2022)